# EUROPEAN PATENT APPLICATION

(11) **EP 4 723 358 A1**
(43) Date of publication of application: **08.04.2026**
(21) Application number: 24814983.3
(22) Date of filing: 09.04.2024
(51) Int. Cl.: H01M 50/538, H01G 11/74, H01G 11/82, H01M 50/107, H01M 50/152, H01M 50/536, H01M 50/559

(54) **BATTERY**

(30) Priority: 30.05.2023 JP 2023088693
(71) Applicant: Panasonic Intellectual Property Management Co., Ltd., Kadoma-shi, Osaka 571-0057 (JP)
(72) Inventor: OKIMOTO Ryota, Osaka 571-0057 (JP)
(74) Representative: Eisenführ Speiser
(86) International application number: PCT/JP2024/014347
(87) International publication number: WO 2024/247496

(57) **Abstract**

A disclosed battery 10 includes a bottomed cylindrical case 12 having an opening at one end, an electrode group 11 housed in the case 12 and including a first electrode and a second electrode 11a, a sealing cap 13 that seals the opening, and a plurality of first tabs 16 each electrically connected to the first electrode and each connected to the sealing cap 13 by welding. In the above configuration, the number of person-hours for manufacturing can be reduced.

## Description

### [Technical Field]

The present disclosure relates to a battery.

### [Background Art]

Conventionally, a battery has been known that has a configuration in which one of electrodes of an electrode group and a sealing body are connected through a plurality of tabs (e.g., see Patent Literature 1). The battery of Patent Literature 1 includes a bottomed cylindrical case having an opening at one end, an electrode group housed in the case and including a positive electrode and a negative electrode, and a sealing body that seals the opening of the case, wherein the sealing body includes a current collector plate connected to the positive electrode via a plurality of positive electrode tabs and a cap joined to the current collector plate.

### [Citation List]

### [Patent Literature]

[Patent Literature 1] International Publication No. 2022/270432

### [Summary of Invention]

### [Technical Problem]

However, due to the sealing body, including two components, a current collector plate and a cap, it is required to join the plurality of positive electrode tabs to the current collector plate and join the current collector plate to the cap in manufacturing the battery disclosed in Patent Literature 1. That is, a relatively large number of person-hours are required to manufacture the battery disclosed in Patent Literature 1. Under such circumstances, one of the objects of the present disclosure is to reduce the number of person-hours required for manufacturing.

### [Solution to Problem]

One aspect of the present disclosure relates to a battery. The battery includes: a case having an opening at one end, the case being formed in a bottomed cylindrical shape; an electrode group housed in the case and including a first electrode and a second electrode; a sealing cap that seals the opening; and a plurality of first tabs each electrically connected to the first electrode and each connected to the sealing cap by welding.

### [Advantageous Effects of Invention]

According to the present disclosure, the number of person-hours required for manufacturing can be reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of one example of a battery according to the present disclosure.
[FIG. 2] FIG. 2 is a schematic lower view of a protrusion according to an exemplary embodiment.
[FIG. 3] FIG. 3 is a schematic lower view of a protrusion according to a variation.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A battery according to the present disclosure may be a primary battery such as a lithium primary battery or may be a secondary battery such as an alkaline storage battery (e.g., a nickel-metal hydride battery or a nickel-cadmium battery), a lithium-ion secondary battery, or a lithium-metal secondary battery. In the present disclosure, the battery encompasses power storage devices (e.g., a lithium-ion capacitor and an electric double-layer capacitor) in which at least one of the positive electrode and the negative electrode is a polarizable electrode exhibiting capacity by a non-Faraday reaction. The battery according to the present disclosure includes a case, an electrode group, a sealing cap, and a plurality of first tabs.

The case is formed in a bottomed cylindrical shape having an opening at one end. The case may be made of a metal (e.g., aluminum or an aluminum alloy). The outer shape of the case may be a bottomed cylindrical shape or a bottomed prismatic tubular shape, for example.

The electrode group is housed in the case. The electrode group includes a first electrode and a second electrode. The first electrode and the second electrode may each have a band shape (or an elongated sheet shape). The electrode group may be configured by, for example, winding the first electrode and the second electrode with a band-shaped separator therebetween. The outer shape of the electrode group may correspond to the outer shape of the case, or may be, for example, a cylindrical shape or a prismatic shape. One of the first electrode and the second electrode is a positive electrode, and the other of the first electrode and the second electrode is a negative electrode.

The first electrode may include a band-shaped first current collector and a first active material layer carried on the first current collector. The second electrode may include a band-shaped second current collector and a second active material layer carried on the second current collector. The separator may be formed of a porous sheet having ionic permeability and insulating properties. Examples of the porous sheet include a thin film having micropores, a woven fabric, and a nonwoven fabric.

Taking a lithium-ion secondary battery as an example, the first active material layer may be provided on both surfaces of the first current collector, or alternatively on only one surface of the first current collector. When the first electrode is a positive electrode, the first current collector is a positive electrode current collector (e.g., it can be formed of an aluminum foil or an aluminum alloy foil), and the first active material layer is a positive electrode active material layer (e.g., it can contain a lithium-containing transition metal oxide). When the first electrode is a negative electrode, the first current collector is a negative electrode current collector (e.g., it can be formed of a copper foil or a copper alloy foil), and a negative electrode active material layer (e.g., it can contain a carbonaceous material) may be provided as the first active material layer.

The sealing cap seals the opening of the case. The sealing cap may be made of a metal (e.g., aluminum or an aluminum alloy) but is not limited thereto. For example, the sealing cap may be crimped and fixed to the opening edge of the case via a gasket having insulating properties.

Each of the first tabs is electrically connected to the first electrode. Each first tab may be electrically connected to the first electrode by joining one end thereof to an uncoated portion of the first electrode (i.e., a region where the first current collector is exposed). Each first tab is connected to the sealing cap by welding. The other end of each first tab may be connected to the sealing cap by welding. An example of the welding method is laser welding. The number of the first tabs is not particularly limited and should be two or more, but is preferably four or more, and more preferably six or more, from the viewpoint of reducing the internal resistance of the battery.

As described above, the sealing cap (or a sealing body) is composed of a single component in the battery according to the present disclosure. In the above configuration, it is sufficient only to join (weld) the plurality of first tabs to the sealing cap for manufacturing, which can reduce the number of person-hours as compared with the prior art. In addition, since the sealing body, which is conventionally composed of two components (i.e., a current collector plate and a cap), is replaced with a single component (i.e., a sealing cap), the strength of the sealing body can be improved by increasing the thickness thereof when the height dimension of the electrode group is fixed, or the battery capacity can be improved by increasing the height dimension of the electrode group when the thickness of the sealing body is fixed. Note that both the improvement in the strength of the sealing body and the improvement in the battery capacity can be achieved in a balanced manner, rather than improving only one of them.

The sealing cap may include a protrusion protruding toward the inside of the case. Each of the first tabs may be welded to the side surface of the protrusion. According to this configuration, each of the first tabs can be easily laser-welded from the side of the sealing cap. For example, the protrusion may be integrally formed with the sealing cap when the sealing cap is formed by press molding. Note that the sealing cap may not include such a protrusion. In this case, each first tab may be welded to the lower surface of the sealing cap.

The protrusion may be formed in a ring-shaped form. For example, the protrusion may be formed in a circular ring-shaped, elliptical ring-shaped, triangular ring-shaped, quadrangular ring-shape, or another polygonal ring-shaped form. However, the protrusion may not be formed in a ring-shaped form. For example, a plurality of protrusions may be formed intermittently in the circumferential direction of the case.

The sealing cap may be composed of a single metal component. For example, the sealing cap may be made of aluminum or an aluminum alloy. However, the sealing cap may be composed of another component such as a conductive resin component.

According to the present disclosure, the number of person-hours for manufacturing can be reduced by sealing the opening of the case with a single sealing cap as described above. In addition, according to the present disclosure, the number of components of the battery can be reduced.

Hereinafter, an exemplary battery according to the present disclosure will be described in detail with reference to the drawings. The above-described components can be applied to the components of the exemplary battery described below. The components of the exemplary battery described below can be altered based on the above description. Further, the matters described below may be applied to the above-described embodiments. Among the components of the exemplary battery described below, a component that is not essential to the battery according to the present disclosure may be omitted. It should be noted that the drawings indicated below are schematic and do not accurately reflect the shape or number of actual members.

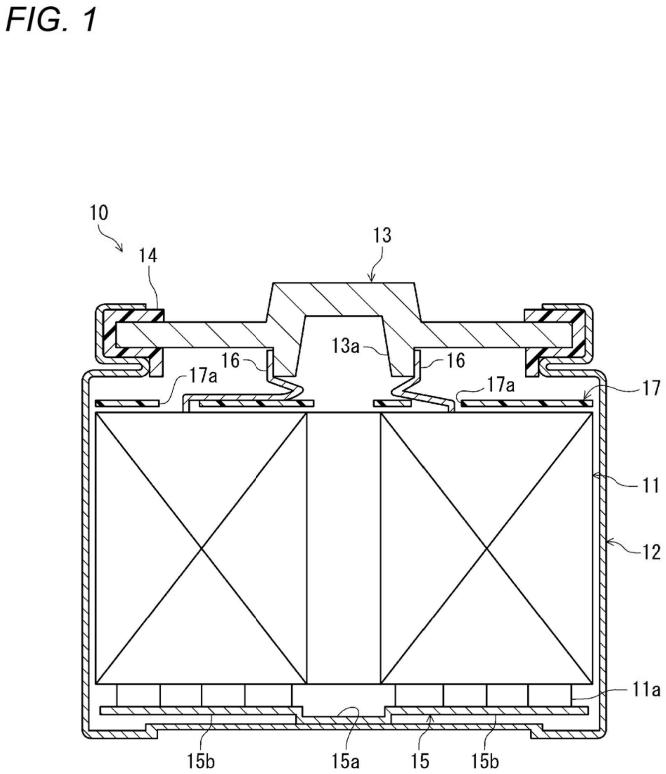

A battery 10 of the present embodiment is a secondary battery that is capable of being repeatedly charged and discharged, and may be, for example, a lithium-ion secondary battery or a lithium secondary battery (e.g., a lithium-metal secondary battery). As illustrated in FIG. 1, the battery 10 includes an electrode group 11, a case 12, a sealing cap 13, a plurality of positive electrode tabs 16, a negative electrode current collector plate 15, and an insulating plate 17.

The electrode group 11 is a wound electrode group including a positive electrode (not illustrated) and a negative electrode 11a each having a band shape. The electrode group 11 is configured by winding the positive electrode and the negative electrode 11a with a band-shaped separator (not illustrated) therebetween. From one end face (lower end face in FIG. 1) of the electrode group 11, an end portion of the negative electrode 11a in the length direction is exposed. The positive electrode is an example of the first electrode, and the negative electrode 11a is an example of the second electrode.

The case 12 is formed in a bottomed cylindrical shape having an opening at one end (upper end in FIG. 1) and houses the electrode group 11. The case 12 is made of a metal.

The sealing cap 13 seals the opening of the case 12. The sealing cap 13 is composed of a single metal component made of, for example, aluminum or an aluminum alloy, and is formed in a disk shape as a whole. The outer peripheral edge of the sealing cap 13 is crimped and fixed to the case 12 via a gasket 14 having insulating properties.

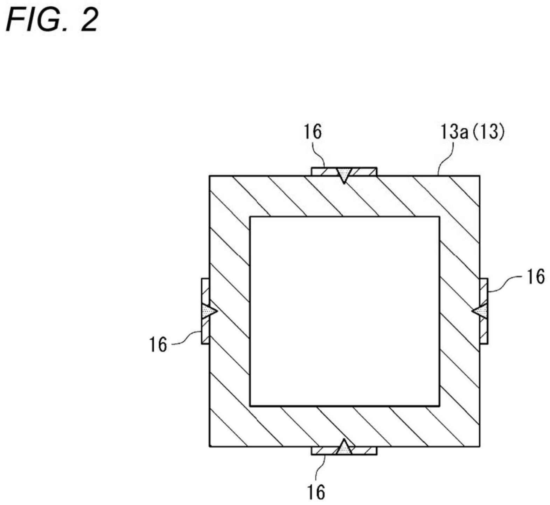

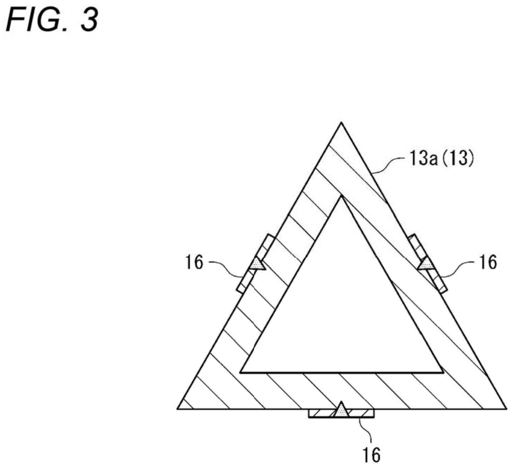

The sealing cap 13 includes a protrusion 13a protruding toward the inside of the case 12. As illustrated in FIG. 2, the protrusion 13a of the present embodiment is formed in a rectangular ring-shaped form as viewed in the axial direction of the case 12, but the present disclosure is not limited thereto. For example, the protrusion 13a may be formed in a triangular ring-shaped form (FIG. 3) or a circular ring-shaped form (not illustrated), as viewed in the axial direction of the case 12, or may not be formed in a ring-shaped form. In FIGS. 2 and 3, the welds between the protrusion 13a (sealing cap 13) and the positive electrode tabs 16 are shown by dot hatching.

The plurality of (in this instance, eight) positive electrode tabs 16 are each electrically connected to the positive electrode. Each of the positive electrode tabs 16 is connected to the sealing cap 13 by welding. Each positive electrode tab 16 is connected to the side surface of the protrusion 13a of the sealing cap 13 by welding. In the above configuration, the sealing cap 13 is electrically connected to the positive electrode to function as a positive electrode external terminal of the battery 10. The positive electrode tabs 16 are examples of the first tabs.

The positive electrode tabs 16 each have a radially inwardly bent region located above the insulating plate 17. These regions may be formed by pushing the positive electrode tabs 16 radially inward using a jig (not illustrated) when the sealing cap 13 is inserted into the case 12, after each positive electrode tab 16 has been connected to the sealing cap 13 by welding.

The negative electrode current collector plate 15 includes a first weld 15a welded to the inner bottom surface of the case 12 and second welds 15b integrally formed therewith and welded to the exposed end of the negative electrode 11a. The second welds 15b are located closer to the electrode group 11 (upper side in FIG. 1) than the first weld 15a. The negative electrode current collector plate 15 is connected to the negative electrode 11a at the second welds 15b by laser welding and also connected to the case 12 at the first weld 15a by laser welding. In the above configuration, the case 12 is electrically connected to the negative electrode 11a to function as a negative electrode external terminal of the battery 10.

The insulating plate 17 is provided above the electrode group 11 and electrically insulates the case 12 from the electrode group 11. The insulating plate 17 is made of an insulative resin and generally ring-shaped as a whole. The insulating plate 17 has at least one insertion hole 17a through which the plurality of positive electrode tabs 16 are inserted.

### <<Supplemental Remarks>>

According to the above description of the embodiments, the following techniques are disclosed.

### (Technique 1)

A battery including:
a case having an opening at one end, the case being formed in a bottomed cylindrical shape;
an electrode group housed in the case and including a first electrode and a second electrode;
a sealing cap that seals the opening; and
a plurality of first tabs each electrically connected to the first electrode and each connected to the sealing cap by welding.

### (Technique 2)

The batter according to Technique 1, wherein the sealing cap includes a protrusion protruding toward inside of the case, and
each of the first tabs is welded to a side surface of the protrusion.

### (Technique 3)

The battery according to Technique 2, wherein the protrusion is formed in a ring-shaped form.

### (Technique 4)

The battery according to any one of Techniques 1 to 3, wherein the sealing cap is composed of a single metal component.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used in batteries.

### [Reference Signs List]

10: battery
11: electrode group
   11a: negative electrode (second electrode)
12: case
13: sealing cap
   13a: protrusion
14: gasket
15: negative electrode current collector plate
   15a: first weld
   15b: second weld
16: positive electrode tab (first tab)
17: insulating plate
   17a: insertion hole

## Claims

1. A battery comprising:
a case having an opening at one end, the case being formed in a bottomed cylindrical shape;
an electrode group housed in the case and including a first electrode and a second electrode;
a sealing cap that seals the opening; and
a plurality of first tabs each electrically connected to the first electrode and each connected to the sealing cap by welding.

2. The battery according to claim 1,
wherein the sealing cap includes a protrusion protruding toward inside of the case, and
each of the first tabs is welded to a side surface of the protrusion.

3. The battery according to claim 2,
wherein the protrusion is formed in a ring-shaped form.

4. The battery according to any one of claims 1 to 3,
wherein the sealing cap is composed of a single metal component.
